# FASCICULE DE BREVET EUROPEEN

(11) **EP 3 553 904 B1**
(45) Date de publication et mention de la délivrance du brevet: **20.10.2021**
(21) Numéro de dépôt: 19163686.9
(22) Date de dépôt: 19.03.2019
(51) Int. Cl.: H02B 1/044, H01H 19/02

(54) **DISPOSITIF DE FIXATION D'UN ORGANE DE COMMANDE ET/OU DE SIGNALISATION**
BEFESTIGUNGSVORRICHTUNG EINES STEUER- UND/ODER SIGNALISIERUNGSORGANS
ATTACHMENT DEVICE FOR A CONTROL AND/OR SIGNALLING MEMBER

(30) Priorité: 10.04.2018 FR 1853091
(43) Date de publication de la demande: 16.10.2019
(73) Titulaire: Schneider Electric Industries SAS, 92500 Rueil Malmaison (FR)
(72) Inventeur: THIZON, Patrice, 16600 Ruelle sur Touvre (FR)
(74) Mandataire: Mouney, Jérôme

(56) Documents cités:
- EP-A1- 0 889 564
- EP-A1- 1 152 441
- CN-A- 102 243 929
- FR-A1- 2 292 402
- FR-A1- 2 657 492
- FR-A1- 2 735 944
- FR-A1- 2 974 681

## Description

### Domaine technique de l'invention

La présente invention se rapporte à un dispositif de fixation d'un organe de commande et/ou de signalisation. L'invention concerne également un organe de commande et/ou de signalisation incluant ledit dispositif de fixation.

### Etat de la technique

De manière connue, un organe de commande et/ou de signalisation électrique utilisé dans l'industrie, tel qu'un bouton-poussoir, un bouton d'arrêt d'urgence, un voyant lumineux, est destiné à être assemblé à travers une ouverture réalisée dans une paroi, telle que par exemple le panneau d'un tableau électrique ou la porte d'une armoire électrique. L'organe de commande et/ou de signalisation comporte un corps tubulaire pouvant être engagé dans l'ouverture de la paroi et présentant une collerette venant prendre appui contre la face externe de la paroi. Un dispositif de fixation adapté permet de fixer l'organe dans l'ouverture en prenant appui sur la face interne de la paroi. Le dispositif de fixation comporte en règle générale une embase pouvant s'apparier, à l'aide de moyens de verrouillage, au corps de l'organe du côté de la face interne de la paroi, cette embase étant destinée à recevoir au moins un bloc de contacts électriques et des moyens de fixation adaptés pour prendre appui contre la face interne de la paroi et assurer la fixation de l'organe.

Dans l'état de la technique, plusieurs dispositifs de fixation ont déjà été proposés. La plupart d'entre eux comportent une embase qui s'assemble au corps tubulaire de l'organe de commande et/ou de signalisation et porte des blocs de contact. Cette embase peut notamment comporter des moyens de fixation à trois points utilisant un ensemble composé d'une vis pointeau 500 et d'une bride 501 manipulée grâce à la vis et pourvue de deux branches d'ancrage. Ce type de solution est notamment décrit dans les demandes de brevet référencées FR2735274A1**,** WO91/07790A1**,** FR2654266A1 et EP0889564A1**.** Cependant, ces dispositifs de fixation sont souvent complexes à fabriquer, donc coûteux. FR2292402 A1 décrit une solution avec embase fixée avec deux vis pointeau.

La demande de brevet EP1152441A1 décrit pour sa part une autre solution de fixation des blocs de contact électrique.

Pour faire plus simple, l'embase peut comporter des moyens de fixation à deux points, utilisant alors généralement deux vis pointeau traversant l'embase et venant en appui contre la face interne de la paroi.

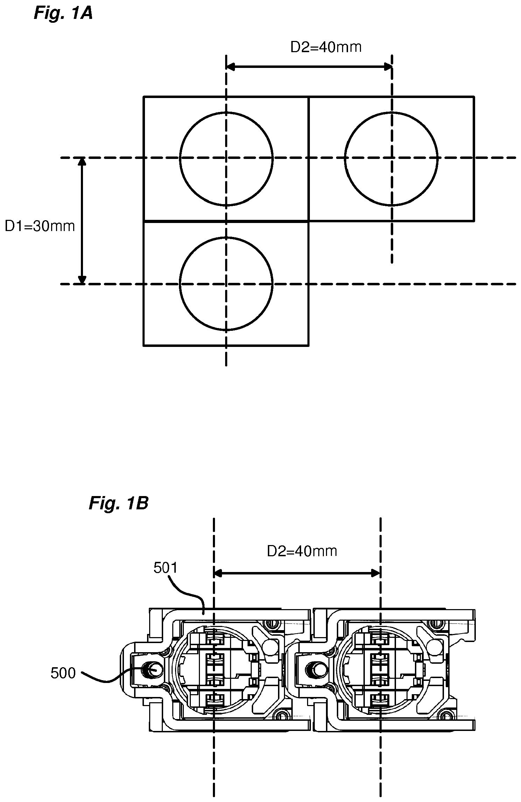

Cependant, il existe une contrainte à laquelle la solution de fixation doit toujours répondre. Cette contrainte réside dans son encombrement. En effet, pour rester compatible avec les organes de commande et/ou de signalisation déjà installés, la distance D1 présente entre l'axe d'un premier organe de commande et/ou de signalisation et l'axe d'un deuxième organe de commande et/ou de signalisation adjacent dans la direction verticale doit être de 30mm et la distance D2 présente entre l'axe d'un premier organe de commande et/ou de signalisation et l'axe d'un deuxième organe de commande et/ou de signalisation adjacent dans la direction horizontale doit être de 40mm. La figure 1A illustre ce principe. Dans les solutions antérieures à trois points de fixation utilisant une bride, cette contrainte est satisfaite car les deux points d'appui situés à l'extrémité de la bride viennent se disposer de part et d'autre de la vis pointeau lorsque deux organes sont positionnés de manière adjacente dans la direction horizontale. La figure 1B permet d'illustrer ce principe où l'on peut voir que l'entraxe définie par D2 dans la direction horizontale est maintenu à 40mm.

On comprend cependant que cette contrainte liée à l'entraxe entre deux organes adjacents, notamment dans la direction horizontale, peut s'avérer problématique avec une solution de fixation à deux points utilisant deux vis pointeau. En effet, dans ce cas de figure, comme les deux vis doivent être dans un même plan axial horizontal pour garantir une fixation satisfaisante de l'organe de commande et/ou de signalisation, il devient difficile de satisfaire la contrainte puisque les vis ne peuvent plus être contournées. Une solution connue et déjà mise en oeuvre consiste à ne pas respecter la contrainte et à proposer une solution de fixation qui dispose d'un entraxe plus élevé dans la direction horizontale, par exemple de 50mm. Bien entendu, cette solution n'est pas satisfaisante car elle ne permet plus de rester compatible avec les organes de commande et/ou de signalisation existants et déjà installés. De plus, un tel écartement peut également entraîner une déformation de la paroi.

Il existe donc un besoin de proposer un dispositif de fixation en deux points de fixation qui permette à la fois de garantir une fixation fiable de l'organe de commande et/ou de signalisation à travers la paroi, de permettre une fixation robuste des blocs de contact, et de conserver un entraxe de 40mm suivant la direction horizontale.

### Exposé de l'invention

Ce besoin est comblé par un dispositif de fixation d'un organe de commande et/ou de signalisation destiné à être inséré à travers une ouverture réalisée dans une paroi et qui comporte un corps tubulaire destiné à venir en appui contre une première face de la paroi, ledit dispositif comprenant :
- une embase présentant une ouverture axiale réalisée suivant une direction principale, destinée à recevoir ledit corps de l'organe de commande et/ou de signalisation, ladite embase étant orientée entre une zone dite avant et une zone dite arrière suivant une direction dite d'assemblage qui est perpendiculaire à ladite direction principale et comportant un support auquel est fixé le corps tubulaire, une platine qui est fixée sur ledit support et qui comporte des moyens de fixation d'un ou plusieurs blocs de contact ou de signalisation électrique amovibles, lesdits moyens de fixation comprenant, pour chaque bloc de contact ou de signalisation, une fenêtre située en zone arrière et destinée à coopérer avec un bec d'accrochage du bloc de contact ou de signalisation et un logement d'accroché situé en zone avant et destiné à coopérer avec un organe d'accrochage élastique du bloc de contact ou de signalisation.

Ledit dispositif présente notamment les particularités suivantes :
- L'embase comporte un premier orifice définissant un premier axe en zone avant et un deuxième orifice définissant un deuxième axe en zone arrière qui est parallèle audit premier axe et perpendiculaire à ladite direction d'assemblage,
- Le dispositif comporte une première vis de fixation à visser dans ledit premier orifice pour s'appuyer contre une deuxième face de la paroi et une deuxième vis de fixation à visser dans ledit deuxième orifice contre ladite deuxième face de la paroi,
- La platine comporte une partie perpendiculaire à ladite direction principale, à travers laquelle est réalisée ladite ouverture axiale et une partie recourbée à travers laquelle est réalisée chaque fenêtre de réception d'un bec d'accrochage d'un bloc de contact électrique ou de signalisation, ladite partie recourbée étant formée dans un plan perpendiculaire à la direction d'assemblage et situé entre ledit premier axe et ledit deuxième axe.

Selon une particularité, chaque logement d'accroché de la platine comporte deux découpes parallèles comportant chacune une zone d'appui axiale distincte pour un crochet d'un bloc de contact ou de signalisation.

Selon une autre particularité, pour chaque logement d'accroché, les deux zones d'appui axiales sont réalisées dans un même plan parallèle au premier plan de fixation et situé en arrière par rapport à ce plan.

Selon une autre particularité, ledit premier orifice est incliné de sorte que la première vis de fixation, de la tête vers sa pointe, est inclinée vers la direction principale.

Selon une autre particularité, ledit deuxième orifice est incliné de sorte que la deuxième vis de fixation, de la tête vers sa pointe, est inclinée vers la direction principale.

L'invention concerne également un organe de commande et/ou de signalisation destiné à être inséré à travers une ouverture réalisée dans une paroi et qui comporte un corps tubulaire destiné à venir en appui contre une première face de la paroi, ledit organe comportant :
- Un dispositif de fixation tel que défini ci-dessus, ledit dispositif de fixation étant verrouillé sur son corps tubulaire,
- Au moins un bloc de contact ou un bloc de signalisation qui comporte un boîtier et des moyens de fixation agencés pour se fixer sur la platine dudit dispositif de fixation.

Selon une particularité, chaque bloc de contact ou bloc de signalisation comporte un bec agencé pour venir s'insérer dans une fenêtre d'accueil de ladite platine et un organe d'accrochage agencé pour coopérer avec un logement d'accroché de la platine.

Selon une autre particularité, le bloc de contact ou le bloc de signalisation comporte une face d'assemblage plane destinée à coopérer avec la partie transversale de la platine et en ce que ledit bec est réalisé dans le prolongement de ladite face d'assemblage de son boîtier.

Selon une autre particularité, chaque bloc de contact comporte un talon agencé sur une face opposée à ladite face d'assemblage et agencé pour accueillir un bloc de contact supplémentaire par empilement.

Selon une autre particularité, chaque organe d'accrochage comporte deux crochets et une âme centrale reliant les deux crochets.

Selon une autre particularité, ladite âme centrale comporte un évidement ménagé pour créer un passage d'accès vers une vis de fixation du dispositif de fixation.

Selon une autre particularité, les deux vis sont agencées pour pointer à l'aplomb d'un épaulement réalisé sur le corps tubulaire de l'organe.

Selon une autre particularité, chaque bloc de contact ou bloc de signalisation comporte deux pans inclinés agencés pour assurer un passage d'un outil de manœuvre de l'organe d'accrochage et un accès aux deux vis de fixation.

### Brève description des figures

D'autres caractéristiques et avantages vont apparaître dans la description détaillée qui suit faite en regard des dessins annexés dans lesquels :
- La figure 1A illustre le principe d'entraxe à respecter entre deux organes de commande et/ou de signalisation adjacents.
- La figure 1B représente une solution de l'état de la technique utilisant une solution de fixation en trois points et permettant de respecter la contrainte d'entraxe de 40mm dans la direction horizontale.
- Les figures 2A et 2B représentent, vu en coupe axiale, respectivement un organe de commande de type bouton-poussoir fixé sur une paroi et sur lequel est adapté le dispositif de fixation de l'invention ainsi qu'un bloc de contact électrique et un organe de commande de type bouton tournant lumineux fixé sur une paroi et sur lequel est adapté le dispositif de fixation de l'invention ainsi qu'un bloc de signalisation.
- La figure 3 représente, en vue de dessous et en perspective, un organe de commande fixé sur une paroi grâce au dispositif de fixation de l'invention.
- La figure 4A représente, vue en perspective, l'embase employée dans le dispositif de fixation de l'invention. La figure 4B représente ladite embase de manière schématique et permet d'illustrer les différents axes de fixation.
- La figure 5A représente, vu en perspective, un bloc de contact électrique apte à s'adapter sur l'embase de la figure 4. La figure 5B montre l'intérieur du bloc de contact électrique.
- Les figures 6A et 6B représentent, vu en perspective, un organe de commande sur lequel est adapté le dispositif de fixation de l'invention, montré respectivement du côté avant et du côté arrière.

### Description détaillée d'au moins un mode de réalisation

L'invention concerne un dispositif de fixation pour organe de commande et/ou de signalisation.

Pour la suite de la description, on définit :
- Une direction principale (X) qui correspond à l'axe longitudinal qui traverse l'ouverture dans laquelle l'organe de commande et/ou de signalisation est inséré et qui correspond donc également à l'axe du corps tubulaire de l'organe de commande et/ou de signalisation et à l'axe de l'ouverture réalisée dans l'embase. Le terme "axial" est donc à comprendre comme une direction confondue avec la direction principale ou un plan orienté suivant cette direction principale.
- Les termes "avant" et "arrière" sont à comprendre de manière non limitative.

Le côté avant AV et le côté arrière AR sont délimités par rapport à un plan P médian axial de l'organe de commande et/ou de signalisation.
- Une direction d'assemblage (Y) qui est perpendiculaire à la direction principale (X) et orientée entre l'avant et l'arrière, perpendiculairement au plan médian axial.

De manière non limitative, l'organe de commande et/ou de signalisation 1 peut être un bouton-poussoir, un bouton tournant, un voyant lumineux, un bouton d'arrêt d'urgence, un bouton-poussoir lumineux, un bouton tournant lumineux ou équivalent. Sur les figures annexées, différents types d'organes de commande et/ou de signalisation ont été représentés. Un organe de commande et de signalisation peut comporter à la fois une fonction de commande avec un bouton et une fonction de signalisation puisque le bouton peut être éclairé.

L'organe de commande et/ou de signalisation 1 est destiné à s'engager dans une ouverture circulaire de diamètre normalisé réalisée à travers une paroi 2, par exemple la porte d'une armoire électrique, un panneau d'un tableau électrique ou d'un pupitre de commande. L'ouverture peut être de diamètre normalisé égal à 22mm ou 25,5mm.

L'organe de commande et/ou de signalisation 1 comporte un corps 10 tubulaire sur lequel est monté un élément de commande et/ou de signalisation (bouton poussoir, bouton tournant et/ou capot transparent). Le corps est apte à venir s'insérer dans l'ouverture réalisée à travers la paroi 2. Le corps 10 tubulaire comporte une collerette formant un épaulement 100, qui vient prendre appui sur la face externe 20 de la paroi 2 autour de l'ouverture. Le corps peut être réalisé en matériau métallique ou plastique.

L'organe de commande et/ou de signalisation 1 comporte un dispositif de fixation destiné à assurer son maintien par au moins un appui contre la face interne 21 de la paroi.

Le dispositif de fixation comporte une embase 3 présentant une ouverture 30 circulaire de diamètre adaptée pour être traversée par le corps 10 tubulaire de l'organe de commande et/ou de signalisation 1. L'ouverture 30 présente un axe suivant la direction principale (X). L'embase 3 vient s'apparier sur le corps 10 tubulaire de l'organe de commande et/ou de signalisation. De manière non limitative, la fixation de l'embase 3 sur le corps 1 tubulaire peut être réalisée par emboîtement, encliquetage ou par un mécanisme de baïonnette.

L'embase 3 est réalisée en deux parties ou pièces indépendantes fixées entre elles et avantageusement réalisées dans des matériaux différents. La première partie de l'embase est formée d'un support 31 et la deuxième partie de l'embase est formée d'une platine 32 porte-contact fixée sur ledit support. Le support 31 de l'embase peut être réalisé dans un matériau de type zamak et la platine 32 porte-contact dans un matériau métallique, par exemple en acier.

L'embase 3 comporte une zone dite avant AV et une zone dite arrière AR définie de part et d'autre de son ouverture, par rapport au plan axial P.

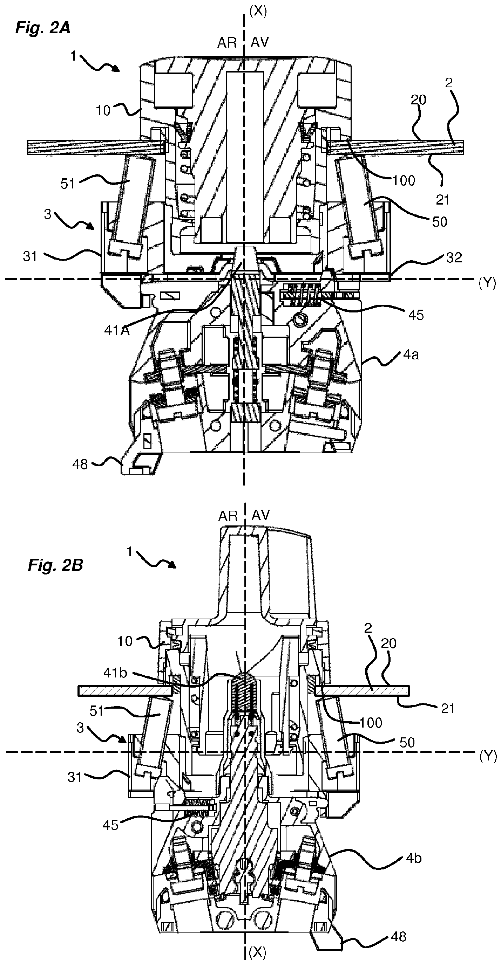

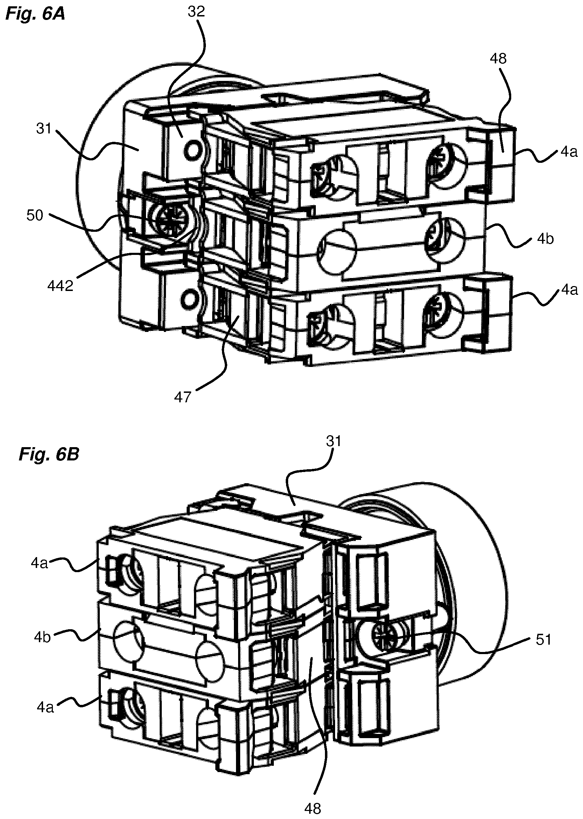

La platine 32 porte-contact est destinée à recevoir un ou plusieurs blocs 4a, 4b de contact électrique ou de signalisation. Les blocs 4a, 4b sont disposés de manière adjacente, perpendiculairement à la direction d'assemblage (comme sur les figures 6A et 6B). Ils coopèrent avec la platine 32 porte-contact par des moyens de fixation adaptés, détaillés ci-après. Un organe de commande et/ou de signalisation 1 peut comporter jusqu'à trois blocs 4a, 4b adjacents. Lorsqu'un bloc de signalisation 4b est employé (figure 2B), celui-ci est placé au milieu afin de venir loger son organe lumineux 41b dans l'ouverture 30 de l'embase 3.

Selon un aspect particulier de l'invention, le dispositif de fixation de l'organe de commande et/ou de signalisation 1 est à deux points de fixation, dits premier point de fixation et deuxième point de fixation.

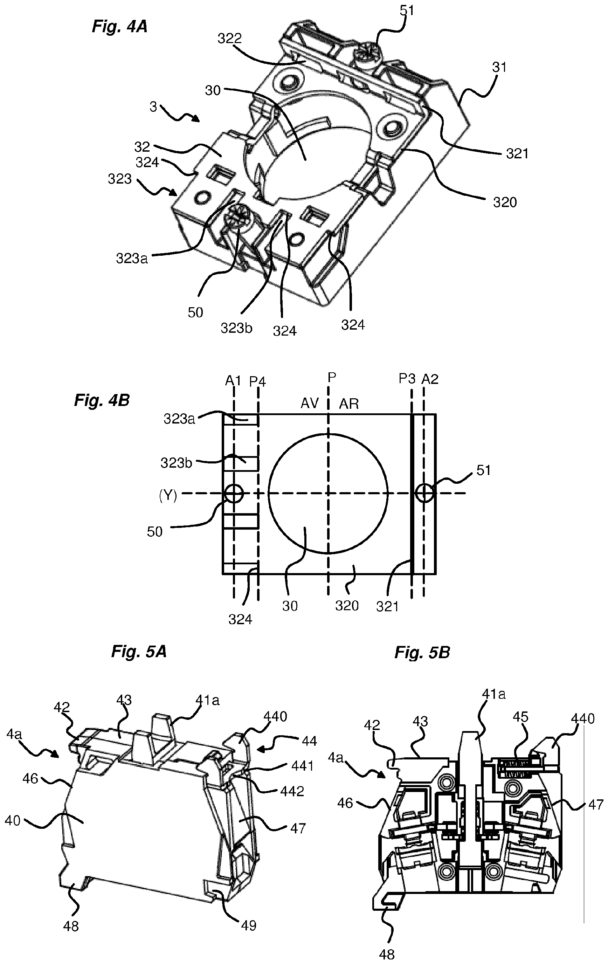

Comme visible sur la figure 4B, les deux points de fixation sont opposés par rapport à l'ouverture 30 de l'embase 3, le premier point de fixation étant situé en zone avant AV et le deuxième point de fixation étant situé en zone arrière AR. Les deux points de fixation sont définis suivant deux axes A1, A2 qui sont parallèles entre eux et au plan médian axial P, et perpendiculaires à la direction d'assemblage (Y) (figure 4B). Le premier axe A1 est situé à l'avant et le deuxième axe A2 est situé à l'arrière.

Au premier point de fixation, le dispositif de fixation comporte un premier orifice taraudé et au deuxième point de fixation, le dispositif de fixation comporte un deuxième orifice taraudé.

Le dispositif de fixation comporte une première vis de fixation 50 à visser dans le premier orifice et une deuxième vis de fixation 51 à visser dans le deuxième orifice. L'extrémité de chaque vis de fixation 50, 51 est destinée à venir en appui contre la face interne 21 de la paroi 2. L'amplitude du vissage permet de s'adapter à l'épaisseur de la paroi 2. Les têtes des vis de fixation présentent avantageusement un diamètre adapté en vue de gagner en encombrement.

Comme représenté sur les figures 2A et 2B, il faut noter que chaque orifice taraudé est incliné par rapport à la direction principale (X). Ainsi, lors du vissage, de la tête vers sa pointe, la première vis de fixation 50 est inclinée vers la direction principale, c'est-à-dire de l'avant vers l'arrière et la deuxième vis de fixation, de la tête vers la pointe, est également inclinée vers la direction principale, c'est-à-dire de l'arrière vers l'avant. Ainsi les vis vont pointer sur la face interne, à l'aplomb ou presque de l'épaulement 100 du corps 10 de l'organe de commande et/ou de signalisation sur la face externe 20, permettant ainsi d'éviter la déformation de la paroi 2, notamment lorsque celle-ci est particulièrement fine.

En référence à la figure 4A, la platine porte-contact 32 comporte une première partie 320 présentant une face d'assemblage plane perpendiculaire à la direction principale (X), à travers laquelle est réalisée l'ouverture 30 de l'embase et une deuxième partie 321 recourbée ou pliée qui s'étend suivant un plan perpendiculaire à la face d'assemblage, et donc parallèle à la direction principale et aux deux axes A1, A2 définis ci-dessus. Selon un aspect particulier de l'invention, la partie recourbée 321 est réalisée dans un plan P3 situé en avant par rapport au deuxième axe A2. Elle vient donc s'intercaler entre le deuxième axe A2 et un plan parallèle qui est tangent au bord de l'ouverture 30.

La platine porte-contact 32 comporte des moyens de fixation pour les blocs 4a, 4b de contact électrique ou de signalisation électrique. Ces moyens de fixation sont situés en zone avant et en zone arrière de l'embase 3.

En zone arrière, la partie recourbée 321 de la platine 32 comporte plusieurs fenêtres 322 d'accueil, une fenêtre 322 d'accueil pour chaque bloc 4a, 4b de contact ou de signalisation. Pour trois blocs de contact ou de signalisation, la platine 32 comporte trois fenêtres 322 d'accueil.

En zone avant, la platine 32, dans sa face d'assemblage, comporte plusieurs logements d'accroché 323 alignés suivant une direction perpendiculaire à la direction principale (X) et à la direction d'assemblage (Y). Chaque logement d'accroché se compose de deux découpes 323a, 323b parallèles identiques réalisées dans la platine. Chaque découpe comporte une zone d'appui 324 réalisée dans un plan P4 situé en arrière par rapport au premier axe A1, de manière à laisser accessible la première vis de fixation 50 du dispositif (figure 4B). Ce plan P4 est ainsi agencé entre le premier axe A1 et un plan parallèle qui est tangent au bord de l'ouverture 30.

De manière connue, en référence aux figures 5A et 5B, un bloc de contact électrique 4a comporte un boitier 40 de forme prismatique en matériau isolant et un poussoir 41a saillant au-dessus d'une face d'assemblage 43 du boîtier et mobile en translation ou rotation et un ensemble de contacts fixes et mobiles logés dans le boîtier. La face d'assemblage 43 est destinée à venir en appui contre la face d'assemblage plane de la première partie 320 de la platine 32. L'actionnement d'un bouton de l'organe de commande actionne le poussoir mobile et les contacts mobiles du bloc. Le bloc de contact peut être de type normalement ouvert (NO) ou normalement fermé (NC). Un bloc de signalisation 4b comporte pour sa part, dans un boîtier de forme identique, un organe lumineux de type diode électroluminescente saillant au-dessus de sa face d'appui et destiné à éclairer l'organe du côté de la face externe 20 de la paroi 2. Un bloc de contact et un bloc de signalisation comportent des moyens de fixation identiques, leur permettant de s'adapter sur l'embase 3. Le boîtier du bloc comporte en outre deux grandes faces latérales planes opposées et deux petites faces latérales opposés, l'une étant à l'avant et l'autre à l'arrière.

Les moyens de fixation du bloc 4a sur la platine porte-contact 32 comportent, à l'arrière, un bec 42 réalisé sur le boîtier du bloc, dans le prolongement de sa face d'assemblage 43 et à l'avant un organe d'accrochage 44 élastique, monté sur un ressort 45 et comportant deux crochets 440 reliés entre eux par une âme centrale 441 et positionnés de manière symétrique. L'organe d'accrochage 44 est sollicité par son ressort 45 dans la direction d'assemblage dans un sens qui va de l'avant vers l'arrière. Les deux crochets 440 sont saillants par rapport à la face d'assemblage 43. Le bec 42 présente une extrémité libre qui est orientée suivant la direction d'assemblage, dans un sens allant de l'avant vers l'arrière. Les deux crochets sont également orientés dans le même sens que le bec 42. Les deux crochets s'étendent de part et d'autre de la face d'assemblage 43 de manière à se positionner de part et d'autre de la tête de la première vis de fixation 50 lors du montage. Le bec 42 ne fait pas saillie par rapport au plan formé par face d'assemblage, lui permettant de venir directement s'engager dans une fenêtre 322 d'accueil de la platine 32.

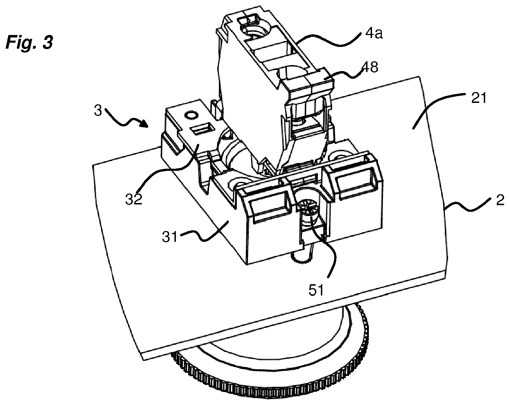

Un bloc 4 fixé au centre de l'embase se trouve dans l'alignement des deux vis de fixation 50, 51 (figure 3). Selon un aspect particulier de l'invention, l'âme centrale 441 de l'organe d'accrochage présente un évidement 442 permettant d'épouser la tête de vis et de la laisser accessible lorsque le bloc est accroché en position centrale. De plus chaque petite face latérale du boîtier 40 du bloc comporte un pan oblique 46, 47 permettant d'offrir un passage incliné pour un outil de manœuvrede l'organe d'accrochage 44 situé à l'avant et pour les deux vis de fixation 50, 51 rendues ainsi accessibles à l'avant et à l'arrière.

Selon un aspect particulier de l'invention, le bec 42 d'un bloc 4a, 4b de contact ou de signalisation est destiné à venir s'insérer dans une fenêtre 322 d'accueil de la platine 32 porte-contact et après insertion, chaque organe d'accrochage 44 vient coopérer avec le logement d'accroché 323 prévu. Les crochets 440 peuvent présenter une portion inclinée sur leur partie supérieure afin de favoriser la translation de l'organe d'accrochage.

Sur la face opposée à sa face d'assemblage 43, le boîtier 40 de chaque bloc 4a de contact peut présenter un talon 48 qui est saillant de ladite face et qui permet d'ajouter un deuxième bloc en empilement. Un bloc 4b de signalisation ne dispose pas d'un talon de ce type car ces blocs ne sont pas empilables. Le deuxième bloc vient se fixer de la même manière que sur la platine 32 porte-contact. Ce talon 48 joue ainsi le rôle de la fenêtre 322 d'accueil présent sur la platine 32 porte-contact. Des logements d'accroché 49 sont prévus à l'avant du bloc et formés de renfoncements ménagés sur les deux grandes faces latérales du boîtier du bloc. Ils sont destinés à coopérer avec l'organe d'accrochage 44 du deuxième bloc qui est empilé.

Les figures 5A et 5B représentent ainsi un organe de commande de type bouton-poussoir doté du dispositif de fixation de l'invention sur lequel trois blocs ont été ajoutés. Le bloc central est un bloc de signalisation 4b et les deux blocs externes sont des blocs 4a de contact électrique. Ces figures montrent notamment que les deux vis de fixation 50, 51 restent accessibles après montage des blocs, permettant ainsi un montage et démontage aisé de l'organe 1 sur une paroi.

La solution de fixation de l'invention présente ainsi de nombreux avantages, parmi lesquels :
- Elle permet de conserver un entraxe de 40mm dans la direction horizontale, tout en utilisant une fixation en deux points avec deux vis ;
- Elle conserve une grande modularité en ce qu'elle permet toujours d'accueillir des blocs de contact électrique, des blocs de signalisation, un empilement de plusieurs blocs...
- Elle garantit une fixation optimale de l'organe de commande et/ou de signalisation, sans déformation de la paroi ;
- Elle est peu couteuse car elle utilise un nombre limité de pièces et car l'embase est réalisée en deux pièces fabriquées dans des matériaux distincts.

## Revendications

1. Dispositif de fixation d'un organe de commande et/ou de signalisation (1) destiné à être inséré à travers une ouverture réalisée dans une paroi (2) et qui comporte un corps tubulaire (10) destiné à venir en appui contre une première face (20) de la paroi, ledit dispositif comprenant :
- une embase (3) présentant une ouverture (30) axiale réalisée suivant une direction principale (X), destinée à recevoir ledit corps (10) de l'organe de commande et/ou de signalisation, ladite embase (3) étant orientée entre une zone dite avant et une zone dite arrière suivant une direction dite d'assemblage (Y) qui est perpendiculaire à ladite direction principale (X) et comportant un support (31) auquel est fixé le corps tubulaire, une platine (32) qui est fixée sur ledit support et qui comporte des moyens de fixation d'un ou plusieurs blocs (4a, 4b) de contact ou de signalisation électrique amovibles, lesdits moyens de fixation comprenant, pour chaque bloc de contact ou de signalisation, une fenêtre (322) située en zone arrière et destinée à coopérer avec un bec (42) d'accrochage du bloc de contact ou de signalisation et un logement d'accroché (323) situé en zone avant et destiné à coopérer avec un organe d'accrochage (44) élastique du bloc (4a, 4b) de contact ou de signalisation,
**Caractérisé en ce que** :
- L'embase (3) comporte un premier orifice définissant un premier axe (A1) en zone avant et un deuxième orifice définissant un deuxième axe (A2) en zone arrière qui est parallèle audit premier axe et perpendiculaire à ladite direction d'assemblage (Y),
- Le dispositif comporte une première vis de fixation (50) à visser dans ledit premier orifice pour s'appuyer contre une deuxième face de la paroi et une deuxième vis de fixation (51) à visser dans ledit deuxième orifice contre ladite deuxième face de la paroi, et **en ce que**
- La platine (32) comporte une partie (320) perpendiculaire à ladite direction principale, à travers laquelle est réalisée ladite ouverture (30) axiale et une partie (321) recourbée à travers laquelle est réalisée chaque fenêtre (322) de réception d'un bec (42) d'accrochage d'un bloc de contact électrique ou de signalisation, ladite partie recourbée (321) étant formée dans un plan (P3) perpendiculaire à la direction d'assemblage (Y) et situé entre ledit premier axe (A1) et ledit deuxième axe (A2).

2. Dispositif selon la revendication 1, **caractérisé en ce que** chaque logement d'accroche (323) de la platine comporte deux découpes (323a, 323b) parallèles comportant chacune une zone d'appui (324) axiale distincte pour un crochet (440) d'un bloc de contact ou de signalisation.

3. Dispositif selon la revendication 2, **caractérisé en ce que**, pour chaque logement d'accroché (323), les deux zones d'appui axiales sont réalisées dans un même plan parallèle au premier plan de fixation et situé en arrière par rapport à ce plan.

4. Dispositif selon l'une des revendications 1 à 3, **caractérisé en ce que** ledit premier orifice est incliné de sorte que la première vis de fixation, de la tête vers sa pointe, est inclinée vers la direction principale (X).

5. Dispositif selon l'une des revendications 1 à 4, **caractérisé en ce que** ledit deuxième orifice est incliné de sorte que la deuxième vis de fixation, de la tête vers sa pointe, est inclinée vers la direction principale (X).

6. Organe de commande et/ou de signalisation (1) destiné à être inséré à travers une ouverture réalisée dans une paroi (2) et qui comporte un corps tubulaire (10) destiné à venir en appui contre une première face (20) de la paroi, **caractérisé en ce qu'**il comporte :
- Un dispositif de fixation tel que défini dans l'une des revendications 1 à 5, ledit dispositif étant verrouillé sur son corps tubulaire (10),
- Au moins un bloc de contact (4a) ou bloc de signalisation (4b) qui comporte un boîtier (40) et des moyens de fixation agencés pour se fixer sur la platine (32) dudit dispositif de fixation.

7. Organe selon la revendication 6, **caractérisé en ce que** chaque bloc de contact (4a) ou bloc de signalisation (4b) comporte un bec (42) agencé pour venir s'insérer dans une fenêtre (322) d'accueil de ladite platine (32) et un organe d'accrochage (44) agencé pour coopérer avec un logement d'accroché (323) de la platine.

8. Organe selon la revendication 7, **caractérisé en ce que** le bloc de contact (4a) ou le bloc de signalisation (4b) comporte une face d'assemblage (43) plane destinée à coopérer avec la partie transversale (320) de la platine et **en ce que** ledit bec (42) est réalisé dans le prolongement de ladite face d'assemblage (43) de son boîtier (40).

9. Organe selon la revendication 8, **caractérisé en ce que** chaque bloc de contact (4a) comporte un talon (48) agencé sur une face opposée à ladite face d'assemblage (43) et agencé pour accueillir un bloc de contact supplémentaire par empilement.

10. Organe selon l'une des revendications 6 à 9, **caractérisé en ce que** chaque organe d'accrochage comporte deux crochets (440) et une âme centrale (441) reliant les deux crochets.

11. Organe selon la revendication 10, **caractérisé en ce que** ladite âme centrale (441) comporte un évidement (442) ménagé pour créer un passage d'accès vers une vis de fixation du dispositif de fixation.

12. Organe selon l'une des revendications 6 à 11, **caractérisé en ce que** les deux vis sont agencées pour pointer à l'aplomb d'un épaulement (100) réalisé sur le corps tubulaire (10) de l'organe.

13. Organe selon l'une des revendications 6 à 12, **caractérisé en ce que** chaque bloc de contact (4a) ou bloc de signalisation (4b) comporte deux pans inclinés (46, 47) agencés pour assurer un passage d'un outil de manœuvrede l'organe d'accrochage (44) et un accès aux deux vis de fixation (50, 51).

## Patentansprüche

1. Befestigungsvorrichtung für ein Befehls- und/oder Meldeorgan (1), das dazu bestimmt ist, durch eine in einer Wand (2) ausgeführte Öffnung hindurch eingeführt zu werden, und das einen röhrenförmigen Körper (10) beinhaltet, der dazu bestimmt ist, an einer ersten Seite (20) der Wand zur Anlage zu kommen, wobei die Vorrichtung umfasst:
- einen Sockel (3), der eine entlang einer Hauptrichtung (X) ausgeführte axiale Öffnung (30) aufweist, die dazu bestimmt ist, den Körper (10) des Befehls- und/oder Meldeorgans aufzunehmen, wobei der Sockel (3) zwischen einem sogenannten vorderen Bereich und einem sogenannten hinteren Bereich entlang einer sogenannten Montagerichtung (Y) ausgerichtet ist, die senkrecht zu der Hauptrichtung (X) verläuft, und einen Träger (31) beinhaltet, an dem der röhrenförmigen Körper befestigt ist, eine Platte (32), die an dem Träger befestigt ist und die Befestigungsmittel zum Befestigen eines oder mehrerer lösbarer Kontakt-oder Meldeblöcke beinhaltet (4a, 4b), wobei die Befestigungsmittel für jeden Kontakt-oder Meldeblock ein Fenster (322) umfassen, das im hinteren Bereich gelegen ist und dazu bestimmt ist, mit einer Einhaknase (42) des Kontakt- oder Meldeblocks zusammenzuwirken, und eine Rastaufnahme (323), die im vorderen Bereich gelegen ist und dazu bestimmt ist, mit einem federnden Einhakorgan (44) des Kontakt-und/oder Meldeblocks (4a, 4b) zusammenzuwirken,
**dadurch gekennzeichnet dass**:
- der Sockel (3) eine erste Öffnung beinhaltet, die eine erste Achse (A1) im vorderen Bereich definiert, und eine zweite Öffnung, die eine zweite Achse (A2) im hinteren Bereich definiert, die parallel zu der ersten Achse und senkrecht zu der Montagerichtung (Y) ist,
- die Vorrichtung eine erste Befestigungsschraube (50) beinhaltet, die in die erste Öffnung einzuschrauben ist, um an einer ersten Seite der Wand anzuliegen, und eine zweite Befestigungsschraube (51), die in die zweite Öffnung gegen die zweite Seite der Wand einzuschrauben ist, und dass
- die Platte (32) einen senkrecht zur Hauptrichtung verlaufenden Teil (320) beinhaltet, durch den hindurch die axiale Öffnung (30) ausgeführt ist, und einen umgebogenen Teil (321), durch den hindurch jedes Fenster (322) zum Aufnehmen einer Einhaknase (42) eines elektrischen Kontakt- oder Meldeblocks ausgeführt ist, wobei der umgebogene Teil (321) in einer Ebene (P3) gebildet ist, die senkrecht zur Montagerichtung (Y) verläuft und zwischen der ersten Achse (A1) und der zweiten Achse (A2) gelegen ist.

2. Vorrichtung nach Anspruch 1, **dadurch gekennzeichnet, dass** jede Rastaufnahme (323) der Platte zwei parallele Ausschnitte (323a, 323b) beinhaltet, die jeweils einen separaten axialen Anlagebereich (324) für einen Haken (440) eines Kontakt- oder Meldeblocks beinhaltet.

3. Vorrichtung nach Anspruch 2, **dadurch gekennzeichnet, dass** bei jeder Rastaufnahme (323) die beiden axialen Anlagebereiche in derselben Ebene ausgeführt sind, die parallel zur ersten Befestigungsebene ist und in Bezug auf diese Ebene dahinter gelegen ist.

4. Vorrichtung nach einem der Ansprüche 1 bis 3, **dadurch gekennzeichnet, dass** die erste Öffnung geneigt ist, so dass die erste Befestigungsschraube, vom Kopf zu ihrer Spitze hin, zur Hauptrichtung (X) hin geneigt ist.

5. Vorrichtung nach einem der Ansprüche 1 bis 4, **dadurch gekennzeichnet, dass** die zweite Öffnung geneigt ist, so dass die zweite Befestigungsschraube, vom Kopf zu ihrer Spitze hin, zur Hauptrichtung (X) hin geneigt ist.

6. Befehls- und/oder Meldeorgan (1), das dazu bestimmt ist, durch eine in einer Wand (2) ausgeführte Öffnung hindurch eingeführt zu werden, und das einen röhrenförmigen Körper (10) beinhaltet, der dazu bestimmt ist, an einer ersten Seite (20) der Wand zur Anlage zu kommen, **dadurch gekennzeichnet, dass** es beinhaltet:
- eine Befestigungsvorrichtung wie in einem der Ansprüche 1 bis 5 definiert, wobei die Vorrichtung an ihrem röhrenförmigen Körper (10) verriegelt ist,
- mindestens einen Kontaktblock (4a) oder Meldeblock (4b), der ein Gehäuse (40) beinhaltet und Befestigungsmittel, die dazu eingerichtet sind, an der Platte (32) der Befestigungsvorrichtung befestigt zu werden.

7. Organ nach Anspruch 6, **dadurch gekennzeichnet, dass** jeder Kontaktblock (4a) oder Meldeblock (4b) eine Nase (42) beinhaltet, die dazu eingerichtet ist, in ein Aufnahmefenster (322) der Platte (32) eingeführt zu werden, und ein Einhakorgan (44), das dazu eingerichtet ist, mit einer Rastaufnahme (323) der Platte zusammenzuwirken.

8. Organ nach Anspruch 7, **dadurch gekennzeichnet, dass** der Kontaktblock (4a) oder der Meldeblock (4b) eine ebene Montageseite (43) beinhaltet, die dazu bestimmt ist, mit dem quer verlaufenden Teil (320) der Platte zusammenzuwirken, und dass die Nase (42) in der Verlängerung der Montageseite (43) seines Gehäuses (40) ausgeführt ist.

9. Organ nach Anspruch 8, **dadurch gekennzeichnet, dass** jeder Kontaktblock (4a) einen Absatz (48) beinhaltet, der an einer zur Montageseite (43) entgegengesetzten Seite eingerichtet ist und dazu eingerichtet ist, durch Stapeln einen zusätzlichen Kontaktblock aufzunehmen.

10. Organ nach einem der Ansprüche 6 bis 9, **dadurch gekennzeichnet, dass** jedes Einhakorgan zwei Haken (440) beinhaltet und einen zentralen Steg (441), der die beiden Haken verbindet.

11. Organ nach Anspruch 10, **dadurch gekennzeichnet, dass** der zentrale Steg (441) eine Ausnehmung (442) beinhaltet, die dazu ausgebildet ist, einen Zugangsdurchgang zu einer Befestigungsschraube der Befestigungsvorrichtung zu schaffen.

12. Organ nach einem der Ansprüche 6 bis 11, **dadurch gekennzeichnet, dass** die beiden Schrauben dazu eingerichtet sind, zum Lot einer Schulter (100) zu zeigen, die am röhrenförmigen Körper (10) des Organs ausgeführt ist.

13. Organ nach einem der Ansprüche 6 bis 12, **dadurch gekennzeichnet, dass** jeder Kontaktblock (4a) oder Meldeblock (4b) zwei Schrägen (46, 47) beinhaltet, die dazu eingerichtet sind, einen Durchgang für ein Werkzeug zum Betätigen des Einhakorgans (44) und einen Zugang zu den beiden Befestigungsschrauben (50, 51) zu gewährleisten.

## Claims

1. Fixing device for a control and/or signalling component (1) designed to be inserted through an opening produced in a wall (2) and which comprises a tubular support (10) designed to come into abutment against a first face (20) of the wall, said device comprising:
- a base (3) having an axial opening (30) in a main direction (X), designed to receive said body (10) of the control and/or signalling component, said base (3) being oriented between a zone, called front zone, and a zone, called rear zone, in a direction, called assembly direction (Y), that is perpendicular to said main direction (X), and comprising a support (31), to which the tubular body is fixed, a plate (32) that is fixed on said support and comprises means for fixing one or more detachable electrical contact or signalling blocks (4a, 4b), said fixing means comprising, for each contact or signalling block, a bay (322) located in the rear zone and designed to engage with an attachment latch (42) of the contact or signalling block and an attachment socket (323) located in the front zone and designed to engage with a resilient attachment component (44) of the contact or signalling block (4a, 4b),
**characterized in that**:
- the base (3) comprises a first orifice defining a first front zone axis (A1) and a second orifice defining a second rear zone axis (A2) that is parallel to said first axis and is perpendicular to said assembly direction (Y);
- the device comprises a first fixing screw (50) to be screwed into said first orifice in order to press against a second face of the wall and a second fixing screw (51) to be screwed into said second orifice against said second face of the wall, and **in that**
- the plate (32) comprises a part (320) perpendicular to said main direction, through which said axial opening (30) is produced, and a curved part (321), through which each bay (322) is produced for receiving an attachment latch (42) of an electrical or signalling contact block, said curved part (321) being formed in a plane (P3) perpendicular to the assembly direction (Y) and located between said first axis (A1) and said second axis (A2).

2. Device according to Claim 1, **characterized in that** each attachment socket (323) of the plate comprises two parallel cut-outs (323a, 323b) each comprising a distinct axial support zone (324) for a hook (440) of a contact or signalling block.

3. Device according to Claim 2, **characterized in that**, for each attachment socket (323), the two axial support zones are produced in the same plane parallel to the first fixing plane and located at the rear in relation to this plane.

4. Device according to any of Claims 1 to 3, **characterized in that** said first orifice is inclined so that the first fixing screw, from the head towards its tip, is inclined towards the main direction (X).

5. Device according to any of Claims 1 to 4, **characterized in that** said second orifice is inclined so that the second fixing screw, from the head towards its tip, is inclined towards the main direction (X).

6. Control and/or signalling component (1) designed to be inserted through an opening produced in a wall (2) and that comprises a tubular body (10) designed to come into abutment against a first face (20) of the wall, **characterized in that** it comprises:
- a fixing device as defined in any of claims 1 to 5, said device being locked on its tubular body (10);
- at least one contact block (4a) or signalling block (4b) that comprises a casing (40) and fixing means arranged to be fixed onto the plate (32) of said fixing device.

7. Component according to Claim 6, **characterized in that** each contact block (4a) or signalling block (4b) comprises a latch (42) arranged to be inserted into a reception bay (322) of said plate (32) and an attachment component (44) arranged to engage with an attachment socket (323) of the plate.

8. Component according to Claim 7, **characterized in that** the contact block (4a) or signalling block (4b) comprises a flat assembly face (43) designed to engage with the transverse part (320) of the plate and **in that** said latch (42) is produced in the extension of said assembly face (43) of its casing (40).

9. Component according to Claim 8, **characterized in that** each contact block (4a) comprises a heel (48) arranged on a face opposite said assembly face (43) and arranged to receive an additional contact block through stacking.

10. Component according to any of Claims 6 to 9, **characterized in that** each attachment component comprises two hooks (440) and a central core (441) connecting the two hooks.

11. Component according to Claim 10, **characterized in that** said central core (441) comprises a recess (442) arranged to create an access passage towards a fixing screw of the fixing device.

12. Component according to any of Claims 6 to 11, **characterized in that** the two screws are arranged to arrive directly below a shoulder (100) produced on the tubular body (10) of the component.

13. Component according to any of Claims 6 to 12, **characterized in that** each contact block (4a) or signalling block (4b) comprises two inclined sides (46, 47) arranged to provide a passage for a tool for manoeuvring the attachment component (44) and to provide access to the two fixing screws (50, 51).
